# EUROPÄISCHE PATENTANMELDUNG

(11) **EP 1 010 362 A1**
(43) Veröffentlichungstag der Anmeldung: **21.06.2000**
(21) Anmeldenummer: 98811244.7
(22) Anmeldetag: 19.12.1998
(51) Int. Cl.: A01C 23/00

(54) **Einrichtung zur Verteilung von über eine Leitung zugeführter Flüssigkeit**

(71) Anmelder: Agrotechnik Hochdorf AG, 6281 Hochdorf (CH)
(72) Erfinder: Hötschi, Robert, 6275 Ballwil (CH)
(74) Vertreter: Fenner, Werner, Dipl.-Ing.

(57) **Zusammenfassung**

Zur Verteilung von Flüssigkeit auf Feldern, Fluren oder Aeckern ist eine Einrichtung vorgesehen, die eine an einem fahrzeugseitig befestigten Gestell angeordnete Verteilvorrichtung (1) mit einer Zuführ- (2) und mehreren, an Verteilleitungen (32) angeschlossenen Austrittsöffnungen (3) ausgebildetes Rotorgehäuse (5) aufweist, wobei ein in letzterem gelagerter Verteilrotor (11) wenigstens eine mit den Austrittsöffnungen (3) kommunizierende Durchtrittsöffnung (15) und durch einen die Austrittsöffnungen (3) dicht überstreichenden, scheiben- oder zylinderförmigen Rotor (14) besitzt.

## Beschreibung

Die Erfindung betrifft eine Einrichtung zur Verteilung von über eine Leitung zugeführter Flüssigkeit, insbesondere Gülle oder Düngemittel, bestehend aus einer an einem Gestell befestigten Verteilvorrichtung, die ein mit einer Zuführ- und mehreren, an Verteilleitungen angeschlossenen Austrittsöffnungen ausgebildetes Rotorgehäuse aufweist, in dem ein die zugeführte Flüssigkeit auf die Austrittsöffnungen leitender Verteilrotor gelagert ist, der beabstandet zur Drehachse eine jeweils mit wenigstens einer Austrittsöffnung des Rotorgehäuses kommunizierende Durchtrittsöffnung aufweist.

Nach einem Prospekt 96/3000 BHAG der Maschinenfabrik Hochdorf AG, CH-6280 Hochdorf sind sog. Schleppschlauchverteiler bekannt, mit denen Flüssigkeiten, insbesondere Gülle auf Felder und Fluren oder Aecker ausgetragen werden. Diese Schleppschlauchverteiler werden mittels Gestell an der Rückseite eines Traktors oder ähnlichen landwirtschaftlichen bzw. kommunalen Fahrzeugen aufgebaut. Dabei wird ein am Traktor befestigter, loser Schlauch mitgeschleppt, über den die Flüssigkeit mit einer Pumpe von einem Behälter oder einer Grube dem Schleppschlauchverteiler zugeführt wird. Dieser besteht aus über dem Gestell angeordneten einer Verteilvorrichtung, die die zugeführte Flüssigkeit durch ein in einem Rotorgehäuse mittels Zapfwelle des Traktors angetriebenen Verteilrotor auf mehrere quer zur Fortbewegungsrichtung verlegte Verteilleitungen fördert. Diese Verteilleitungen aus Schläuchen sind an Austrittsöffnungen, die sich an der Unterseite der Verteilvorrichtung befinden, angeschlossen und enden austragsseitig mit einem zum Boden gerichteten Auslaufabschnitt, dessen Auslauföffnung oberhalb des Bodens endet. Die den Austrag auf die Verteilleitungen bewirkende Verteilvorrichtung befindet sich etwa in der Fortbewegungsrichtungslängsachse des Traktors an höchster Stelle, sodass die Verteilleitungen im horizontalen Gelände zu den Auslaufabschnitten hin ein Gefälle aufweisen.
Einrichtungen zur Verteilung von Flüssigkeiten gemäss der eingangs beschriebenen Art werden auch an der Rückseite von fahrbaren Flüssigkeitsbehältern, beispielsweise Druckfässern angebaut.
Die Verteilung der Flüssigkeit auf eine Breite von etwa 12 m erweist sich beim Befahren von Hanglagen - entlang der Schichtenlinien- als schwierig.
Insbesondere die oberhalb der Fortbewegungslängsachse nach dem Gefälle eines Hanges ausgerichteten Verteilleitungen werden von der Flüssigkeit nicht mehr ausreichend versorgt oder nur auf einer Teiltänge erreicht resp. die in den Verteilleitungen vorkommende Flüssigkeit läuft wieder in den Verteilrotor resp. das Rotorgehäuse zurück. Es kann somit nur der Flächenbereich unterhalb der Fortbewegungslängsachse mit Flüssigkeit aus den Verteilleitungen versorgt werden.
Der Einsatz einer Pumpe kann diesen Umstand nicht zufriedenstellend ändern.

Aufgabe der Erfindung ist es somit, eine Einrichtung nach der eingangs erwähnten Art zu schaffen, mit welcher die Flüssigkeit auch in Hanglagen durch die Verteilvorrichtung weitgehend regelmässig auf die vorgesehene Austragsbreite verteilt werden kann.

Erfindungsgemäss wird diese Aufgabe dadurch gelöst, dass die wenigstens eine, mit der Zuführleitung verbundene Durchtrittsöffnung des Verteilrotors in einem die Austrittsöffnungen des Rotorgehäuses überstreichenden, scheiben- oder zylinderförmigen Rotor angeordnet ist.
Durch diese konstruktive Massnahme kann auf einfache Weise die Flüssigkeit unter Einwirkung einer Zentrifugalkraft auf alle an das Rotorgehäuse der Verteilvorrichtung angeschlossenen Verteilleitungen ausgetragen und dem Vertellrotor eine günstigere Laufstabilität vermittelt werden.

Dabei erweist es sich als vorteilhaft, wenn die mit Verteilleitungen verbundenen Austrittsöffnungen in einer zur Drehachse des Verteilrotors senkrechten Gehäusewand des den angetriebenen Verteilrotor umgebenden Rotorgehäuses angeordnet sind, wobei die Gehäusewand als Boden des Rotorgehäuses und zur Lagerung des Verteilrotors vorgesehen werden kann.

Alternativ könnten die mit Verteilleitungen verbundenen Austrittsöffnungen des Rotorgehäuses auch senkrecht zur Drehachse in einer den Vertellrotor am Umfang umgebenden Gehäusewand, vorzugsweise einer zylindrischen Gehäusewand angeordnet sein, die sich zur Nutzung des durch die Zentrifugalkraft erzeugten Druckes als günstig erweist.

Vorzugsweise soll die zur Drehachse des Verteilrotors senkrechte Gehäusewand zur Lagerung des Verteilrotors benutzt werden, sodass eine günstige Lagerstabilität erzielt wird.

Zweckmässig wird bei einer Ausführungsform, bei der die Austrittsöffnung der Zuführleitung oberhalb und konzentrisch zur Drehachse des Verteilrotors angeordnet ist, wie ansich bekannt, die Durchtrittsöffnung durch einen Leitungsabschnitt des Verteilrotors mit der Zuführleitung verbunden, so dass eine optimale Flüssigkeitsführung entstehen kann.

Zweckmässig ist das Rotorgehäuse auf der der Gehäusewand gegenüberliegenden Seite durch eine mit der Zuführleitung verbundene, abhebbaren Gehäuseabdeckung ausgebildet, die den Zugang in das Gehäuseinnere zu Reinigungszwecken oder zum Austausch von Teilen gewährleistet.

Selbstverständlich wäre es möglich, die mit der Lagerung des Verteilrotors ausgebildete Gehäusewand und die abhebbare Gehäuseabdeckung an der Unterseite anzubringen, ohne dass das Austragsprinzip zu ändern ist.

Zur Verhinderung von Verschmutzungen durch austretende Flüssigkeit besitzt das Rotorgehäuse auf der der Gehäusewand gegenüberliegenden Seite eine mit der Zuführleitung verbundene Gehäuseabdeckung.

Vorteilhaft besitzt der Verteilrotor wenigstens zwei mit Durchtrittsöffnungen versehene Leitungsabschnitte, sodass eine grössere Flüssigkeitsmenge auf die Verteilleitungen gefördert werden kann.

Zum Schutz der Gehäusewand gegen Verschleiss und zur Zerkleinerung von Feststoffanteilen der Flüssigkeit, wie beispielsweise pflanzliche und tierische Rückstände, ist zwischen der Gehäusewand und dem Verteilrotor eine mit ersterer resp. dem Rotorgehäuse drehfest verbundene, ringförmige Zwischenlage angeordnet.

Damit die Verteilung der Flüssigkeit auf die Verteilleitungen effizient erfolgen kann, weist der Verteilrotor einen der Zwischenlage zugewandten bzw. diese überstreichenden, ausserhalb des Bereichs der Durchtrittsöffnungen die Austrittsöffnungen resp. Löcher abdeckenden, ring- oder scheibenförmigen Rotor auf.

Damit der Verteilrotor an der Zwischenlage anliegt, ist er an der Antriebswelle des Antriebsmotors in Richtung der Drehachse versetzbar angeordnet und durch die Kraft einer Feder, beispielsweise Tellerfeder, an die Zwischenlage gehalten.

Anschliessend wird die erfindungsgemässe Einrichtung unter Bezugnahme auf die Zeichnung, auf die bezüglich aller in der Beschreibung nicht näher erwähnten Einzelheiten verwiesen wird, anhand eines Ausführungsbeispiels erläutert. In der Zeichnung zeigen:
- Fig. 1: einen Schnitt in der Drehachse einer Verteilvorrichtung der erfindungsgemässen Einrichtung,
- Fig. 2: eine dreidimensionale Darstellung der Einzelteile der Verteilvorrichtung in einer Montageanordnung und
- Fig. 3: eine Befestigungsanordnung des Verteilrotors an der Antriebswelle eines Antriebsmotors.

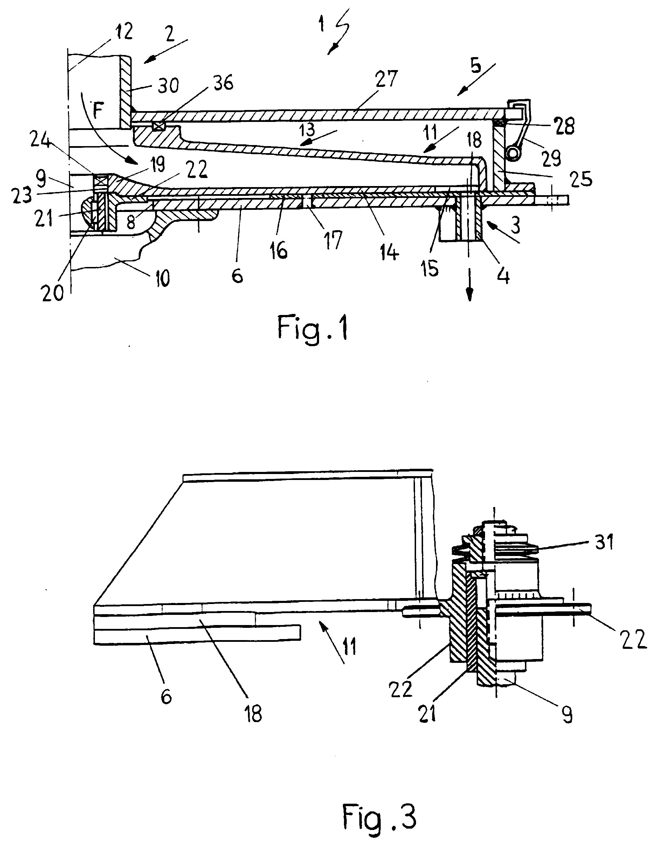

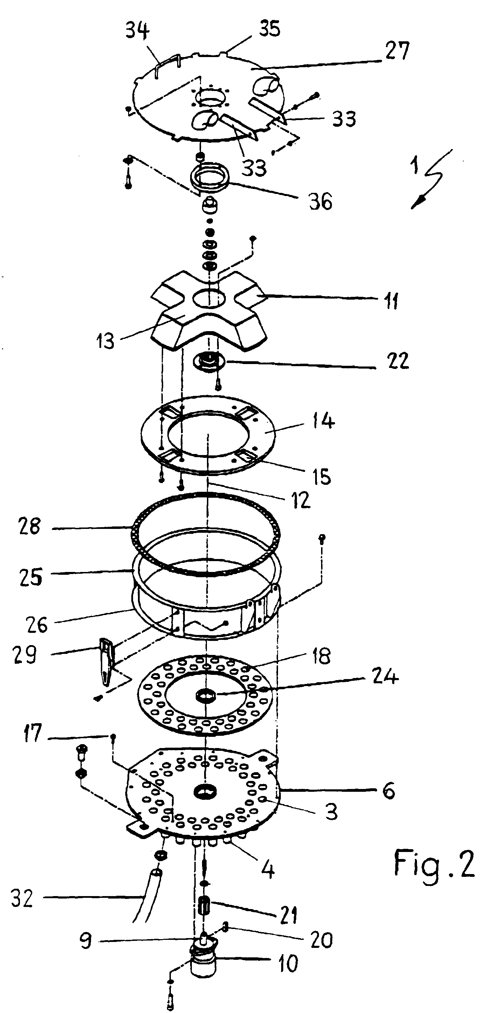

Fig. 1 zeigt eine Verteilvorrichtung 1 einer zur Verteilung von über eine Leitung 2 von oben zugeführter Flüssigkeit, insbesondere Gülle oder Düngemittel, ausgebildeten Einrichtung, die ein nicht ersichtliches, an einem Fahrzeug adaptierbares Gestell aufweist, an dem die Verteilvorrichtung 1 befestigt ist, welche an der Unterseite mit an Verteilleitungen (nicht ersichtlich) angeschlossene Austrittsöffnungen 3 ausgebildet ist. Diese Austrittsöffnungen 3 sind durch Rohrstutzen 4 gebildet, die mit einer scheibenartigen Gehäusewand 6 eines Rotorgehäuses dicht verschweisst oder auf eine andere bekannte Weise verbunden sind.
Die Austrittsöffnungen 3 befinden sich im Umfangsbereich auf zwei unterschiedlich grossen Durchmessern gegenseitig versetzt angeordnet (siehe auch Fig. 2). Die Gehäusewand 6 ist in der Mitte mit einer Ausnehmung 8 versehen, durch die eine Antriebswelle 9 eines an der Gehäusewand 6 befestigten, in Fig. 2 teilweise dargestellten und von einer Pumpe des Fahrzeuges hydraulisch angetriebenen Antriebsmotors 10 hindurchragt.
Die flanschartige Befestigung des Antriebsmotors 10 an der Gehäusewand 6 erfolgt durch die in Fig. 2 angedeuteten Befestigungselemente wie Schraube und Sicherungsring.
Oberhalb der Gehäusewand 6 befindet sich ein mit der Antriebswelle 9 verbundener Verteilrotor 11, der die über die Zuführleitung 2 geförderte Flüssigkeit, gemäss Pfeil F, auf die Austrittsöffnungen 3 leitet.
Der Verteilrotor 11 besteht aus vier radial von der Drehachse 12 des Antriebsmotors 10 abstehenden Armen bzw. Leitungsabschnitten 13, die die Flüssigkeit aus dem zentralen Zuführbereich nach aussen auf die Austrittsöffnungen 3 leiten. Zu diesem Zweck besitzt der Verteilrotor 11 einen der Gehäusewand 6 zugewandten scheibenartigen Rotor 14, der im Ueberdeckungsbereich der Austrittsöffnungen 3 durch die Leitungsabschnitte 13 jeweils eine oder mehrere Durchtrittsöffnungen 15 aufweist, die bei der Rotation mit den Austrittsöffnungen 3 kommunizieren.
Zwischen Gehäusewand 6 und Rotor 14, der mit dem Umfang zur Ueberdeckung über die Austrittsöffnungen 3 hinausragt, ist eine ringförmige Zwischenlage 16 angeordnet, die durch Arretierungsstifte 17 gegen Verdrehen an der Gehäusewand 6 bzw. dem Rotorgehäuse 5 gesichert ist und mit den Austrittsöffnungen 3 kommunizierende Löcher 18 aufweist.
Diese Zwischenlage 16 dient der Zerkleinerung fester Stoffe in der zugeführten Flüssigkeit durch den Verteilrotor 11 und als Dichtung zwischen Verteilrotor 11 und Gehäusewand 6 des Rotorgehäuses 5.
Der Verteilrotor 11, der als Schweiss-, Schmiede- oder Gusskonstruktion ausgebildet sein kann, ist durch eine Nabe 19 des Rotors 14 bzw. des Verteilrotors 11 mit der Antriebswelle 9 des Antriebsmotors 10 verbunden. Zu diesem Zweck ist ein Keil 20 auf der Antriebswelle 9 vorgesehen, auf welcher eine am Umfang mehrkeilig ausgebildete Muffe 21 aufgeschoben ist.
An der Muffe 21 befindet sich ein Keilbahnen aufweisender Flansch 22, an dem die Nabe 19 des Rotors 14 des Verteilrotors 11 befestigt ist (siehe auch Fig. 3). Muffe 21 und Flansch 22 sind an der Antriebswelle 9 in Richtung der Drehachse 12 nachgiebig aufgespannt, wozu ein Federpaket 31 aus Tellerfedern vorgesehen ist, welches den Verteilrotor 11 gegen die Zwischenlage 16 hält.
Zur Meidung, dass Flüssigkeit in den Motor dringt, ist gemäss Fig. 1 zwischen Antriebswelle 9 und Bohrung 23 der Nabe 19 des Verteilrotors 11 eine Wellendichtung 23 angeordnet.
Das den Verteilrotor 11 umgebende dichte Rotorgehäuse 5 besteht weiterhin aus einer konzentrisch zur Drehachse 12 angeordneten, ringförmigen Seitenwand 25, die durch einen Ringflansch 26, der an der Seitenwand 25 befestigt ist, mit der Gehäusewand 6 verbunden ist, und einer abhebbaren Gehäuseabdeckung 27, zwischen der und dem oberen Rand der Seitenwand 25 eine Dichtung 28 eingelegt ist, um das Rotorgehäuse über die an der Aussenseite der Seitenwand 25 befestigten Spannverschlüsse 29 dicht halten zu können.
Unter der Gehäuseabdeckung 27, die durch einen die Zuführleitung 2 bildenden Anschlussstutzen 30 ausgebildet sein kann, befindet sich eine dichtende Einlage 36.
Die durch die Zuführleitung 2 in den Verteilrotor 11 eintretende Flüssigkeit strömt über die Leitungsabschnitte 13 des Verteilrotors 11 durch die Löcher 18 der Zwischenlage 16 und die Austrittsöffnungen 3 in die Verteilleitungen 32, welche in Fig. 2 angedeutet sind.
In Fig. 2 ist die Gehäuseabdeckung 27 mit einem Schamierteil 33 und einem Handgriff 34 zum Oeffnen des Rotorgehäuses 5 gezeigt.
Zur alternativen Verbindung der Gehäuseabdeckung 27 mit der Zuführleitung 2 sind Bohrungen für eine Ringflanschbefestigung vorgesehen.
Die noppenähnlich abstehenden Stege 35 am Umfang der Gehäuseabdeckung 27 sind einem an der Seitenwand 25 befestigten Spannverschluss 29 zugeordnet, um die Gehäuseabdeckung 27 auf die Stirnseite der Seitenwand 25 zu spannen.

## Patentansprüche

1. Einrichtung zur Verteilung von über eine Leitung (2) zugeführter Flüssigkeit, insbesondere Gülle oder Düngemittel, bestehend aus einer an einem Gestell befestigten Verteilvorrichtung (1), die ein mit einer Zuführ- (2) und mehreren, an Verteilleitungen (32) angeschlossenen Austrittsöffnungen (3) ausgebildetes Rotorgehäuse (5) aufweist, in dem ein die zugeführte Flüssigkeit auf die Austrittsöffnungen (3) leitender Verteilrotor (11) gelagert ist, der beabstandet zur Drehachse (12) eine jeweils mit wenigstens einer Austrittsöffnung (3) des Rotorgehäuses (5) kommunizierende Durchtrittsöffnung (15) aufweist, dadurch gekennzeichnet, dass die wenigstens eine, mit der Zuführleitung (2) verbundene Durchtrittsöffnung (15) des Verteilrotors (11) in einem die Austrittsöffnungen (3) des Rotorgehäuses (5) überstreichenden, scheiben- oder zylinderförmigen Rotor (14) angeordnet ist.

2. Einrichtung nach Anspruch 1, bei der die mit Verteilleitungen (32) verbundenen Austrittsöffnungen (3) in einer zur Drehachse (12) des Verteilrotors (11) senkrechten Gehäusewand (6) des den angetriebenen Verteilrotor (11) umgebenden Rotorgehäuses (5) angeordnet sind.

3. Einrichtung nach Anspruch 1, dadurch gekennzeichnet, dass die mit Verteilleitungen (32) verbundenen Austrittsöffnungen (3) senkrecht zur Drehachse (12) in einer den Verteilrotor (11) am Umfang umgebenden Gehäusewand (6) angeordnet sind.

4. Einrichtung nach Anspruch 2, dadurch gekennzeichnet, dass die Gehäusewand (6) des Rotorgehäuses (5) zur Lagerung des Verteilrotors (11) ausgebildet ist.

5. Einrichtung nach Anspruch 3 oder 4, bei der die Austrittsöffnung der Zuführleitung (2) oberhalb und konzentrisch zur Drehachse (12) des Verteilrotors (11) angeordnet ist, dadurch gekennzeichnet, dass die Durchtrittsöffnung (15) des Verteilrotors durch einen Leitungsabschnitt (13) mit der Zuführleitung (2) verbunden ist.

6. Einrichtung nach Anspruch 5, dadurch gekennzeichnet, dass das Rotorgehäuse (5) auf der der Gehäusewand (6) gegenüberliegenden Seite eine mit der Zuführleitung (2) verbundene Gehäuseabdeckung (27) aufweist.

7. Einrichtung nach einem der Ansprüche 1 bis 6, bei der der Verteilrotor (11) wenigstens zwei mit Durchtrittsöffnungen (15) versehene Leitungsabschnitte (13) aufweist.

8. Einrichtung nach einem der Ansprüche 1 bis 7, dadurch gekennzeichnet, dass zwischen Gehäusewand (6) und Verteilrotor (11) eine mit ersterer bzw. dem Rotorgehäuse 5 drehfest verbundene, vorzugsweise ringförmige Zwischenlage (16) angeordnet ist.

9. Einrichtung nach Anspruch 8, dadurch gekennzeichnet, dass der Verteilrotor (11) einen der Zwischenlage (16) zugewandten, ausserhalb des Bereichs der Durchtrittsöffnungen (15) die Löcher (18) resp. Austrittsöffnungen (3) abdeckenden, ring- oder scheibenförmigen Rotor (14) aufweist.

10. Einrichtung nach einem der Ansprüche 1 bis 9, dadurch gekennzeichnet, dass der Verteilrotor (11) in Richtung der Drehachse (12) an der Antriebswelle (9) des Antriebsmotors (10) nachgiebig befestigt und mittels Feder (31) an der Zwischenlage (16) anliegend gehalten ist.
